# EUROPÄISCHE PATENTSCHRIFT

(11) **EP 2 977 266 B1**
(45) Veröffentlichungstag und Bekanntmachung des Hinweises auf die Patenterteilung: **06.06.2018**
(21) Anmeldenummer: 15176146.7
(22) Anmeldetag: 09.07.2015
(51) Int. Cl.: B60R 1/00

(54) **TRÄGERVORRICHTUNG FÜR DIE BEFESTIGUNG EINER BILDGEBENDEN EINRICHTUNG EINES INDIREKTEN SICHTSYSTEMS AN EINEM FAHRZEUG SOWIE INDIREKTES SICHTSYSTEM HIERMIT**
SUPPORTING DEVICE FOR THE FIXING OF AN IMAGING DEVICE OF AN INDIRECT VISION SYSTEM TO A VEHICLE AND INDIRECT VISION SYSTEM USING THE SAME
DISPOSITIF DE SUPPORT POUR LA FIXATION D'UN DISPOSITIF D'IMAGERIE D'UN SYSTEME DE VISION INDIRECTE DANS UN VEHICULE ET SYSTEME DE VISION INDIRECT EN ETANT DOTE

(30) Priorität: 21.07.2014 DE 102014214128
(43) Veröffentlichungstag der Anmeldung: 27.01.2016
(73) Patentinhaber: MEKRA LANG GmbH & Co. KG, 91465 Ergersheim (DE)
(72) Erfinder: Lang, Werner Dr., 91465 Ergersheim (DE); Hecht, Georg, 91629 Weihenzell (DE); Zink, Matthias, 91620 Ohrenbach (DE); Kilic, Orhan, 91522 Ansbach (DE)
(74) Vertreter: Winter, Brandl, Fürniss, Hübner, Röss, Kaiser, Polte - Partnerschaft mbB

(56) Entgegenhaltungen:
- EP-A1- 0 697 311
- DE-B3-102009 013 645
- DE-U- 7 210 081
- US-A1- 2008 049 343

## Beschreibung

Die Erfindung betrifft eine Trägervorrichtung für die Befestigung einer bildgebenden Einrichtung eines indirekten Sichtsystems an einem Fahrzeug, insbesondere, jedoch nicht ausschließlich einem Nutzfahrzeug. Weiterhin betrifft die vorliegende Erfindung ein derartiges indirektes Sichtsystem, welches mit einer erfindungsgemäßen Trägervorrichtung versehen oder ausgestattet ist.

Ein allgemein bekanntes Beispiel einer "bildgebenden Einrichtung eines indirekten Sichtsystems" ist das Spiegelglas oder die reflektierende Fläche in einem (Außen-) Rückspiegel eines Fahrzeugs. Andere Beispiele derartiger bildgebender Einrichtungen sind beispielsweise Kameras oder andere Bildsensoren.

Die nachfolgende Beschreibung sowie die in der beigefügten Zeichnung dargestellten und erläuterten Ausführungsbeispiele beziehen sich auf die Ausgestaltung einer bildgebenden Einrichtung in Form eines Spiegelglases oder einer vergleichbaren spiegelnden Fläche. Es versteht sich, dass der Gegenstand der vorliegenden Erfindung gleichermaßen auch bei anderen bildgebenden Einrichtungen, also beispielsweise Kameras oder dergleichen, anwendbar ist. Generell kann der Gegenstand der vorliegenden Erfindung sogar zur Befestigung von beliebigen Bauteilen oder Komponenten an einem Tragarm verwendet werden, welche zur mittel- oder unmittelbaren Fahrerunterstützung dienen.

Rückspiegel, speziell Außenrückspiegel, bzw. die hierzu gehörenden Spiegelgehäuse müssen an einem Fahrzeug bzw. einem Karosserieteil des Fahrzeugs abgestützt und befestigt werden. Die Befestigung erfolgt hierbei in einem gewissen Abstand zu dem Karosserieteil, damit der Rückspiegel seinem Einsatzzweck entsprechend verwendet werden kann. Es ist bekannt, auslegerartige Tragarme oder Tragbügel zu verwenden, welche im Fall eines Tragarms mit einem Ende an dem Karosserieteil befestigt sind und am anderen freien Ende das Spiegelgehäuse tragen. Im Fall von Tragbügeln ist der Bügel mit zwei Tragarmen versehen, die jeweils mit einem Ende mit Fahrzeugkarosserie verbunden sind und die an den anderen freien Enden mit einem weiteren Tragarm untereinander verbunden sind. Dieser in der Regel annähernd vertikal verlaufende Tragarm dient dann zur Befestigung eines oder mehrerer Rückspiegel bzw. derer Spiegelgehäuse.

Ungeachtet der Ausbildung des am Fahrzeug befestigbaren Tragarms stellt die Verbindung zwischen dem Tragarm und der bildgebenden Einrichtung, also beispielsweise dem Spiegelgehäuse oder auch direkt dem Spiegelträger, einen Punkt in dem gesamten indirekten Sichtsystem oder Rückspiegelsystem dar, dem hohe Aufmerksamkeit gewidmet werden muss, damit die in der Praxis auftretenden Anforderungen erfüllt sind und damit bei Herstellung, Montage und Wartung des indirekten Sicht- oder Rückspiegelsystems möglichst wenig Nachteile auftreten.

Die Vorrichtung zur Befestigung und Ausrichtung des Rückspiegels am Fahrzeug kann in ihrer Gesamtheit als Trägervorrichtung bezeichnet werden, welche den am Fahrzeug befestigbaren Tragarm und wenigstens ein an dem Tragarm befestigbares Trägerteil aufweist, wobei das Trägerteil wiederum Anschlussmittel zur Montage beispielsweise des Rückspiegels oder des Spiegelgehäuses aufweist. Eine wesentliche Bedeutung kommt hierbei dem Trägerteil zu, welches an dem Tragarm befestigbar ist und somit die Schnittstelle zwischen Spiegel und Tragarm darstellt.

Die Verbindung zwischen Trägerteil und Tragarm muss mit wenig Aufwand zu montieren sein, darf dem gesamten indirekten Sicht- oder Rückspiegelsystem nicht zu viel Masse hinzufügen und muss auf Dauer fest, d. h. lockerungsbeständig, vibrationsunempfindlich und haltbar sein.

Es ist bekannt, das Trägerteil am Tragarm durch Klemmschellen oder vergleichbare Klemmeinrichtungen festzulegen. Problematisch hierbei kann sein, dass sich die Klemmverbindung im Laufe der Zeit durch Vibrationen, thermisch induzierte Ausdehn- und Zusammenziehvorgänge, Fahrtwinddruck oder dergleichen lockert. Auch muss darauf geachtet werden, vom Gesichtspunkt der Kontaktkorrosion her ungünstige Materialpaarungen zu vermeiden.

Andere Befestigungsmöglichkeiten für das Trägerteil am Tragarm sind das Verschrauben oder Verstiften. Auch diese Verbindungsmöglichkeiten leiden unter den Nachteilen von Vibrationsanfälligkeit, Lockerungsgefahr und unter Umständen ungenügender Dauerbelastbarkeit aufgrund von Ermüdungsbrüchen oder dergleichen.

Aus der DE 10 2009 013 645 B3 ist eine drehbare Spiegelhalterung für Kfz-Spiegel bekannt geworden. Ein fahrzeugseitiges erstes Trägerteil und ein spiegelseitiges zweites Trägerteil sind hierbei um eine Drehachse dreh- oder schwenkbeweglich miteinander verbunden. Die Drehachse umfasst einen Bolzen, der in einer Hülse drehbeweglich geführt ist, wobei Formschlussmittel eine axiale Bewegung des Bolzens zur Hülse, also eine Ausziehbewegung entlang der Drehachse verhindern. Die Hülse umgibt den Bolzen geschlossenwandig. In einer Ausgestaltungsform kann die Hülse aus einem thermoplastischen Kunststoff einteilig um den Bolzen gespritzt sein, der ebenfalls aus einem thermoplastischen Kunststoff ist. Zur Sicherstellung der Drehbeweglichkeit haben die hierzu verwendeten Kunststoffe unterschiedliche Schmelztemperaturen.

Die US 2008/0049343 A1 zeigt eine Trägervorrichtung für einen Fahrzeugaußenspiegel mit einem Gehäuse, einem Spiegelglas und einer sich in Längsrichtung des Gehäuses erstreckenden Befestigungsstange zur Befestigung der Trägervorrichtung an einem Fahrzeug. Um Vibrationen des Spiegelglases und der Trägervorrichtung, die aufgrund von Straßenunebenheiten oder natürlicher Teileabnutzung entstehen, zu verhindern, weist die Trägervorrichtung eine Stabilisierungseinheit auf. Die Stabilisierungseinheit weist eine Buchse auf, die an der Befestigungsstange drehfest angebracht ist. Dabei ist die Befestigungsstange im Befestigungsbereich mit der Buchse zusammengedrückt und die Buchse reibschlüssig an der zusammengedrückten Befestigungsstange angebracht oder um sie herum gegossen.

Aufgabe der vorliegenden Erfindung ist es demgegenüber, eine Trägervorrichtung der in Frage stehenden Art so auszugestalten, dass bei einer starren und stabilen Verbindung zwischen Trägerteil und Tragarm mit möglichst geringem konstruktivem und baulichem Aufwand ein Höchstmaß an Betriebszuverlässigkeit und Funktionalität auch über eine lange Gebrauchsdauer hinweg aufrechterhalten werden kann.

Zur Lösung dieser Aufgabe schlägt die vorliegende Erfindung vor, dass das Trägerteil zumindest in einem Befestigungsbereich, in welchem das Trägerteil mit dem Tragarm befestigbar ist, aus einem thermoplastisch verarbeitbaren Material gebildet ist, wobei dann das Trägerteil bzw. dessen Befestigungsbereich durch thermoplastische Umformung den Tragarm zumindest über einen Teilabschnitt hiervon geschlossenwandig umfasst, wobei das Trägerteil den Tragarm drehfest umfasst. Das Trägerteil ist in dem Befestigungsbereich mit dem Tragarm um den Tragarm herum gegossen, insbesondere einsatz-spritzgegossen, und der Tragarm ist als ein Rohrprofil ausgebildet. Der Tragarm weist in dem Befestigungsbereich eine von der restlichen Rohrprofilform abweichende Formgebung und eine Oberflächenkonturierung auf, und das Trägerteil erfährt in dem Befestigungsbereich nach dem Vergussvorgang einen insbesondere radial gerichteten Schwund, der zu einer Verspannung zwischen Tragarm und Trägerteil führt, wobei Abschnitte des durch Schwund verspannten Trägerteils gegen die Oberflächenkonturierung des Tragarms drücken.

Anstelle mechanischer Hilfs- oder Zusatzmittel wie Schrauben, Klemmen oder dergleichen wird somit beim Gegenstand der vorliegenden Erfindung das Trägerteil in seinem Befestigungsbereich mit dem Tragarm thermoplastisch umgeformt, so dass es den Tragarm geschlossenwandig und drehfest umfasst. Unter "geschlossenwandig" ist hierbei im Rahmen der vorliegenden Erfindung zu verstehen, dass das Trägerteil - im Gegensatz zu einer in Axialrichtung geschlitzten Klemme, die dann über eine Klemmschraube oder dergleichen um den Tragarm geklemmt wird - den Tragarm vollständig, also ohne Unterbrechung, umfangsseitig umfasst oder umgreift.

Die Befestigung des Trägerteils erfolgt somit alleine durch thermoplastische Umformung des Trägerteils zumindest in dem Befestigungsbereich hiervon, so dass auf aufwendige mechanische Klemm- oder Haltemittel mit den damit einhergehenden Problemen und Nachteilen verzichtet werden kann. Da das Trägerteil zumindest mit seinem Befestigungsbereich den Tragarm aufgrund der thermoplastischen Umformung geschlossenwandig und drehfest umfasst, ist der Halt des Trägerteils am Tragarm außerordentlich stabil, vibrationsbeständig und dauerhaft.

Erfindungsgemäß ist das Trägerteil in dem Befestigungsbereich um den Tragarm herum gegossen, insbesondere einsatz-spritzgegossen. Das Gießen des Trägerteils um den Tragarm herum im plastifizierten Zustand des Thermoplasten erlaubt somit in einem Arbeitsgang sowohl die Ausbildung des Trägerteils an sich als auch dessen Befestigung an dem Tragarm.

Erfindungsgemäß erfährt das Trägerteil in dem Befestigungsbereich nach dem Vergussvorgang einen insbesondere radial gerichteten Schwund, der zu einer (gezielten) Verspannung zwischen Tragarm und Trägerteil führt. Hierbei weist der Tragarm entsprechende Oberflächenkonturierungen auf, gegen welche dann Abschnitte des durch den Schwund verspannten Trägerteils drücken. Durch diese Maßnahme kann die Verbindung zwischen Tragarm und Trägerteil besonders sicher gemacht werden.

Der Tragarm ist erfindungsgemäß als Rohrprofil ausgebildet, d. h. in Form eines vorgefertigten und damit preiswert erhältlichen Halbzeugs. Hierbei kommt ein weiterer Vorteil der vorliegenden Erfindung besonders zum Tragen: Durch die thermoplastische Umformung des Trägerteils zumindest in dem Befestigungsbereich mit dem Tragarm wird das Trägerteil in jedem Fall in unmittelbare und enge Anlage mit dem Umfang des Tragarms gebracht, auch wenn dieser im Befestigungsbereich eine von der Soll-Formgebung oder der Soll-Kontur abweichende Formgebung oder Kontur hat. Weist beispielsweise der Tragarm in dem Befestigungsbereich aufgrund vorhergehender Fertigungs- oder Bearbeitungsschritte, beispielsweise aufgrund von Biegevorgängen oder dergleichen Deformationen, Oberflächenunregelmäßigkeiten etc. auf, ist es nicht wie bisher notwendig, den Tragarm nachzurichten, um wieder zu der Soll-Kontur, dem Soll-Querschnitt oder der Soll-Oberflächengüte zu gelangen, damit eine Klemmverbindung zufriedenstellend arbeitet; durch die thermoplastische Umformung "schmiegt" sich das Trägerteil auch an einen solchermaßen verformten Tragarm praktisch spaltfrei und damit sicher an.

Zur Erhöhung der Verbindungssicherheit zwischen Trägerteil und Tragarm weist der Tragarm gemäß Anspruch 1 (zumindest) in dem Befestigungsbereich eine von der restlichen Rohrprofilform (also beispielsweise dem Rohrprofil mit rundem Querschnitt) abweichende Formgebung auf. Diese abweichende Formgebung kann nach Anspruch 4 durch eine gezielte bleibende Verformung der Rohrprofilwand gebildet werden, also beispielsweise durch eine seitliche Abflachung, um dem Tragarm im Befestigungsbereich einen mehr oder weniger stark ausgeprägten ovalen Querschnitt zu verleihen. Auch können dem Rohrprofil andere Querschnitte verliehen werden, beispielsweise kann der bevorzugt runde Querschnitt des Rohrprofils durch eine entsprechende Pressbearbeitung Abflachungen und/oder Kanten erhalten.

Bevorzugt ist der Tragarm zumindest in dem Befestigungsbereich mit dem Trägerteil und besonders bevorzugt in seiner Gesamtheit im Wesentlichen langgestreckt/geradlinig ausgebildet, wie dies an sich von bügelförmigen Trägervorrichtungen bekannt ist, Anspruch 2. Der Gegenstand der vorliegenden Erfindung ist jedoch gleichermaßen auch bei einfach ausgebildeten Tragarmen anwendbar, bei denen das indirekte Sichtsystem (Spiegel, Spiegelkopf, Spiegelgehäuse) am freien Ende eines einzelnen Tragarms befestigt ist.

Bevorzugt hat das Rohrprofil einen Rundquerschnitt, ist also preiswert und einfach zu beziehen bzw. bereitzustellen, Anspruch 3.

Die genannten Maßnahmen tragen insbesondere zu einer Verbesserung der Verbindung zwischen Trägerteil und Tragarm in Umfangsrichtung bei, erhöhen also die Verdrehsicherheit des Trägerteils gegenüber dem Tragarm. Um auch eine axiale Lagefixierung des Trägerteils gegenüber dem Tragarm sicherzustellen oder diese zu erhöhen, kann gemäß Anspruch 5 die abweichende Formgebung des Tragarms durch wenigstens ein separates Bauteil gebildet werden, welches starr mit der Rohrprofilwand verbunden ist und von dieser vorsteht. Denkbar sind hierbei Stifte oder Schrauben, welche in den Tragarm eingeführt oder eingeschraubt werden und von dessen Außenumfang radial um einen bestimmten Betrag vorstehen. Hierdurch erfolgen sowohl eine Verdreh- als auch eine Verschiebungssicherung des angebrachten Trägerteils.

Weitere Möglichkeiten zur Erhöhung der Verbindungsfestigkeit sind Nuten, Sicken, Bohrungen, Vertiefungen oder Rändelungen in und/oder auf der Umfangsoberfläche oder Teilen der Umfangsoberfläche im Befestigungsbereich zwischen Trägerteil und Tragarm. Auch durch diese Maßnahmen kann die Verbindung oder Verkrallung zwischen dem Tragarm und dem thermoplastisch umgeformten Material des Trägerteils erhöht oder verbessert werden.

In einer bevorzugten Ausgestaltungsform kann die bildgebende Einrichtung ein Rückspiegel sein, wobei dann das Trägerteil ein Element eines Glasverstellers ist, Anspruch 6. In einer anderen bevorzugten Ausgestaltungsform kann das Trägerteil ein Element eines Kopfverstellers sein, Anspruch 7.

Bevorzugt ist der Tragarm aus Metall oder einer Metalllegierung mit den entsprechenden Festigkeits- und Beständigkeitswerten, Anspruch 8.

Es kann neben dem wenigstens einen Trägerteil für eine bildgebende Einrichtung wenigstens ein weiteres Bauteil oder eine weitere Komponente (bzw. dessen Trägerteil) an dem Tragarm anordenbar sein, welches oder welche zur mittel- oder unmittelbaren Fahrerunterstützung dient, Anspruch 9. Ein Beispiel wäre eine Komponente eines GPS-Systems (Sender und/oder Empfänger). Dieses weitere Bauteil oder diese weitere Komponente wird dann bevorzugt ebenfalls mit einer Trägervorrichtung gemäß der vorliegenden Erfindung an dem Tragarm festgelegt. Mit anderen Worten, der Gegenstand der vorliegenden Erfindung ist nicht ausschließlich auf bildgebende Einrichtung beschränkt, sondern kann allgemein zur Befestigung von Bauteilen oder Komponenten an dem Tragarm verwendet werden, welche zur mittel- oder unmittelbaren Fahrerunterstützung dienen.

Gegenstand der vorliegenden Erfindung ist weiterhin ein indirektes Sichtsystem für ein Fahrzeug mit einer erfindungsgemäßen Trägervorrichtung für die bildgebende Einrichtung hierfür, Anspruch 10.

Weitere Einzelheiten, Aspekte und Vorteile der vorliegenden Erfindung ergeben sich aus der nachfolgenden Beschreibung von Ausführungsformen anhand der Zeichnung.

Es zeigt:
Fig. 1 schematisch vereinfacht die Ansicht einer Trägervorrichtung eines indirekten Sichtsystems zur Erläuterung der Erfindung, wobei dieses indirekte Sichtsystem eine Glasversteller-Rückspiegeleinheit ist;
Fig. 2 eine Fig. 1 entsprechende Darstellung, wobei das indirekte Sichtsystem eine Kopfversteller- Rückspiegeleinheit ist;
Fig. 3 einen schematischen Schnitt durch einen Glasversteller mit einer Trägervorrichtung zur Erläuterung der Erfindung;
Fig. 4 einen Schnitt durch einen Kopfversteller mit einer Trägervorrichtung zur Erläuterung der Erfindung;
Fig. 5 eine andere Ausgestaltung eines Kopfverstellers mit der Trägervorrichtung zur Erläuterung der Erfindung;
Fig. 6 eine Schnittansicht einer Trägervorrichtung mit einem Adapter zur Erläuterung der Erfindung;
Fig. 7 eine Schnittdarstellung durch eine Trägervorrichtung mit Wechseleinsätzen zur Erläuterung der Erfindung;
Fig. 8 eine Schnittdarstellung durch eine weitere Ausgestaltungsform eines Glasverstellers zur Erläuterung der Erfindung, bei dem die Längsmittelachse des Tragarms und eine Längsmittelachse eines Spiegels zueinander versetzt sind;
Fig. 9 in Zusammenschau die Ansicht von vier verschiedenen Ausgestaltungsmöglichkeiten einer Tragarmoberfläche im Befestigungsbereich mit dem Trägerteil zur Erläuterung der Erfindung;
Fig. 10 eine Schnittdarstellung einer erfindungsgemäßen Trägervorrichtung, die in übertriebener oder überzeichneter Darstellung die Auswirkungen bzw. Wirkungsweise einer gezielten Formverspannung aufgrund von Schwund des Trägerteils bzw. seines Befestigungsbereichs veranschaulicht;
Fig. 11 und 12 Seitenansichten auf unterschiedliche Ausgestaltungsformen des Trägerteils in dessen Befestigungsbereich zur Erläuterung der Erfindung;
Fig. 13 eine Fig. 3 entsprechende Darstellung einer weiteren Ausgestaltungsform eines Glasverstellers zur Erläuterung der Erfindung; und
Fig. 14 eine Abwandlung der Ausgestaltungsform von Fig. 13.

In den einzelnen Figuren der Zeichnung, welche jeweils als schematisch und zueinander nicht maßstäblich zu betrachten sind, bezeichnen gleiche Bezugszeichen gleiche oder einander entsprechende Teile oder Abschnitte, und auf eine wiederholte Beschreibung derartiger Teile oder Abschnitte wird gegebenenfalls verzichtet.

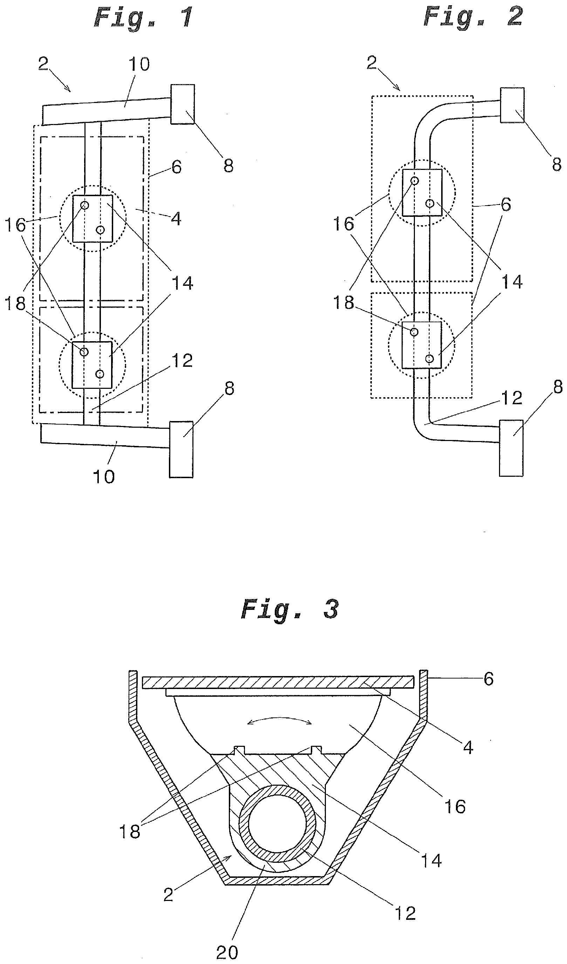

Eine in den einzelnen Figuren der Zeichnung insgesamt mit 2 bezeichnete Trägervorrichtung, welche für die Befestigung einer bildgebenden Einrichtung eines indirekten Sichtsystems an einem in der Zeichnung nicht näher dargestellten Fahrzeug dient, kann auch als "Spiegelträger" bezeichnet werden, wenn das indirekte Sichtsystem eine Rückspiegeleinheit ist und als bildgebende Einrichtung ein Spiegelglas 4 (Fig. 3) aufweist, welches sich in einem Spiegelgehäuse 6 befindet. Andere Beispiele für eine bildgebende Einrichtung wären anstelle des Spiegelglases 4 andere reflektierende Körper oder Flächen, Kameras oder andere Sensoren.

Die Befestigung des Spiegelträgers 2 (der Trägervorrichtung) an dem Fahrzeug erfolgt in dem in den Figuren 1 und 2 dargestellten Ausführungsbeispiel über entsprechende Fahrzeuganbindungen oder Spiegelfüße 8.

Die Figuren 1 und 2 zeigen zwei unterschiedliche Ausgestaltungsformen sowohl des Spiegelträgers 2 als auch der Ausgestaltung des gesamten Systems. So zeigt Fig. 1 die grundsätzliche Bauweise eines sogenannten Glasverstellers und Fig. 2 zeigt die grundsätzliche Bauweise eines sogenannten Kopfverstellers.

In dem Ausführungsbeispiel von Fig. 1 stehen von den beiden Spiegelfüßen 8 zwei Ausleger 10 vor. Zwischen den beiden Auslegern 10 verläuft ein Tragarm 12, der bevorzugt als ein Metallprofil, insbesondere als ein Rohrprofil mit Rundquerschnitt, ausgebildet ist.

Entlang der Längserstreckung des Tragarms 12 zwischen den beiden Auslegern 10 befindet sich wenigstens ein Trägerteil 14, welches in einer später noch zu beschreibenden Art und Weise in Verbindung mit dem Tragarm 12 ist. Das oder die Trägerteile 14 trägt oder tragen jeweils eine Verstelleinrichtung oder Verstelleinheit 16, welche über Kontaktstellen oder Kontaktpunkte 18 in Verbindung mit einer entsprechenden Verstelleinrichtung sind. Die Verstelleinheit 16 trägt jeweils ein Spiegelglas 4, wobei in der Ausgestaltungsform gemäß Fig. 1 bei einer Anordnung von zwei Trägerteilen 14 auf dem Tragarm 12 entsprechend zwei Spiegelgläser 4 zwischen den beiden Auslegern 10 vorhanden sind. Die gesamte Anordnung von Tragarm 12, Trägerteil oder Trägerteilen 14, Verstelleinheit oder Verstelleinheiten 16 und Spiegelglas oder Spiegelgläsern 4 befindet sich in dem Spiegelgehäuse 6 aufgenommen. Das Spiegelgehäuse 6 ist hierbei orts- oder lagefest, und die einzelnen Spiegelgläser 4 können gegenüber dem Spiegelgehäuse 6 durch die jeweiligen Verstelleinheiten 16 unabhängig voneinander bewegt und damit verstellt werden.

Bei der Ausgestaltungsform gemäß Fig. 2 ist der Tragarm 12 nicht als separates Bauteil ausgebildet, welches wie in Fig. 1 gezeigt zwischen den beiden Auslegern 10 verläuft, sondern stellt einen durchgehenden, U-förmig gebogenen Bügel dar, dessen beide Schenkel mit ihren freien Enden über die Spiegelfüße 8 mit der Fahrzeugkarosserie verbunden sind. Zwischen den beiden Schenkeln verläuft ein im Wesentlichen geradlinig verlaufender Abschnitt, der dem separaten Tragarm 12 von Fig. 1 funktionell entspricht und der wieder zur Aufnahme eines oder mehrerer Trägerteile 14 dient. Jedes Trägerteil 14 dient zur Aufnahme oder Lagerung eines entsprechenden Spiegelgehäuses 6 mit dem hierin aufgenommenen Spiegelglas 4, wobei dann über die Verstelleinheit 16 das jeweilige Spiegelgehäuse 6 zusammen mit dem hierin befindlichen Spiegelglas 4 bewegt und damit verstellt werden kann.

Der genaue Aufbau der beiden Ausführungsformen der Figuren 1 und 2, was Spiegelfüße 8, Ausleger 10, Tragarm 12, Trägerteil 14, Verstelleinheiten 16 und Kontaktpunkte 18 betrifft, ist letztendlich aus dem Stand der Technik hinlänglich bekannt, so dass ein detailliertes Eingehen hierauf entbehrlich erscheint.

Der Gegenstand der vorliegenden Erfindung fokussiert sich auf die Befestigung der einzelnen Trägerteile 14 auf dem zwischen den beiden Auslegern 10 bzw. den beiden Spiegelfüßen 8 verlaufenden, im Wesentlichen geradlinigen und im Wesentlichen parallel zur Fahrzeugkarosserie angeordneten Tragarm 12 oder Abschnitt des Tragarms 12 (Fig. 2).

Wie bereits eingangs erläutert, erfolgte die Befestigung des Trägerteils 14 an dem Tragarm 12 bzw. dessen im Wesentlichen parallel zur Fahrzeugkarosserie verlaufenden Abschnitt (Fig. 2) bisher durch verschiedene Klemm- oder Verschraubungstechniken.

Beim Gegenstand der vorliegenden Erfindung ist das Trägerteil 14 zumindest in einem Befestigungsbereich, also einem Bereich oder Abschnitt des Tragarms 12, in welchem das Trägerteil 14 mit dem Tragarm 12 zu verbinden ist, aus einem thermoplastisch verarbeitbaren Material, insbesondere einem entsprechenden Kunststoff oder Kunstharz gebildet. Durch eine thermoplastische Umformung des Trägerteils wird bewirkt, dass das Trägerteil 14 den Tragarm 12 zumindest über einen Teilabschnitt des Tragarms 12 (also insbesondere in dem Befestigungsbereich) geschlossenwandig umfasst.

Figur 3 zeigt in einer Schnittdarstellung den Grundgedanken der vorliegenden Erfindung: Das Trägerteil 14, welches aus einem thermoplastisch verarbeitbaren oder thermoplastisch umformbaren Material gebildet ist, umgreift oder umfasst den Tragarm 12 in einem in den einzelnen Figuren der Zeichnung nicht näher bezeichneten Befestigungsbereich geschlossenwandig, wobei unter "geschlossenwandig" im Rahmen der vorliegenden Erfindung zu verstehen ist, dass ein Abschnitt 20 des Trägerteils 14, der gemäß Fig. 3 den Tragarm 12 umgreift, ohne Unterbrechungen verläuft, also beispielsweise nicht geschlitzt ist, wobei dann die Breite dieses Schlitzes in bekannter Weise durch eines oder mehrere Stellmittel (Schrauben) verengt werden könnte, um das Trägerteil 14 am Tragarm 12 festzuklemmen.

Figur 3 zeigt die Ausgestaltung der vorliegenden Erfindung nach Art eines Glasverstellers, das heißt, das Spiegelglas 4 wird von der Verstelleinheit 16 mittelbar oder unmittelbar getragen oder gelagert, und die Verstelleinheit 16 ist über die Anschlüsse oder Kontaktpunkte 18 in Verbindung mit den Trägerteil 14. Der Doppelpfeil in Fig. 3 zeigt die von der Verstelleinheit 16 auf das Spiegelglas 4 aufbringbare Verstellbewegung.

Das Spiegelgehäuse 6 ist hierbei unbeweglich oder fest und beispielsweise gemäß Fig. 1 jeweils endseitig an den beiden Auslegern 10 festgelegt.

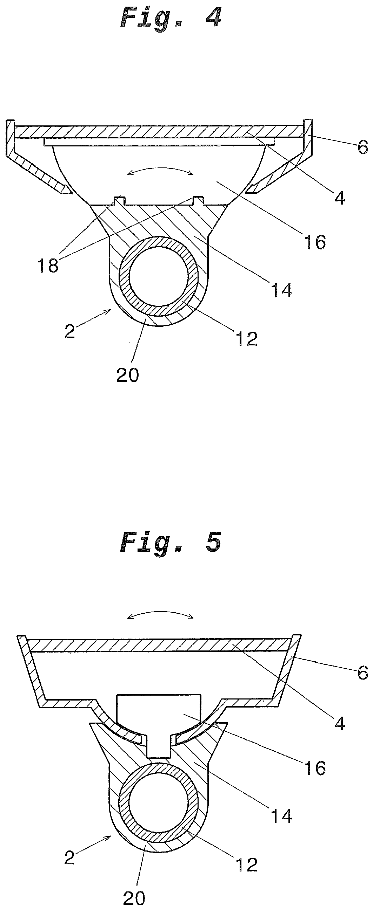

Figur 4 zeigt eine Fig. 3 entsprechende Schnittdarstellung, wobei der Gegenstand der vorliegenden Erfindung bei einem Kopfversteller angewendet wird, bei dem sich das Spiegelgehäuse 6 zusammen mit dem Spiegelglas 4 unter Einwirkung der Verstelleinheit 16 bewegt. Auch hier ist das Trägerteil 14 zumindest in dem Befestigungsbereich mit dem Tragarm 12 thermoplastisch verarbeitbar und umgreift den Tragarm 12 mit seinem Abschnitt 20.

Figur 5 zeigt ebenfalls die Ausgestaltung nach Art eines Kopfverstellers, bei der jedoch im Gegensatz zu Fig. 4 die Verstelleinheit 16 nicht an dem Spiegelglas 4, sondern an dem das Spiegelglas 4 haltenden Spiegelgehäuse 6 angreift. Auch bei dieser Ausgestaltungsform ist das Trägerteil 14 zumindest in seinem Befestigungsbereich mit dem Tragarm 12 thermoplastisch verarbeitbar und umgreift diesen mit seinem Abschnitt 20 geschlossenwandig.

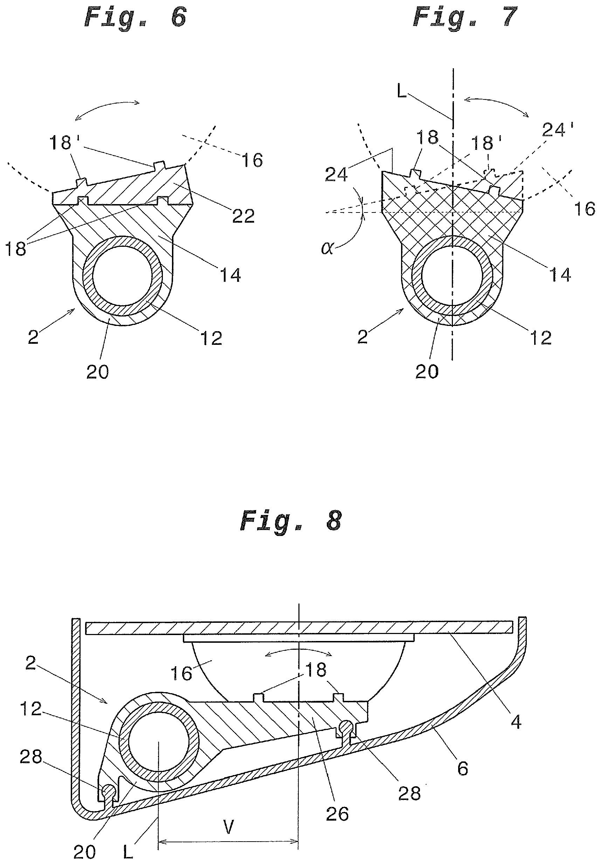

Figur 6 zeigt die Möglichkeit, auf die Kontaktpunkte 18 seitens des Trägerteils 14 einen Adapter 22 aufzusetzen, der in der Grund- oder Nullstellung der Verstelleinheit 16 bereits eine gewisse Schrägstellung des Spiegelglases 4 oder des Spiegelgehäuses 6 bewirkt. Analog zu den Kontaktpunkten 18 seitens des Trägerteils 14 trägt der Adapter 22 weitere Kontaktpunkte 18'.

Figur 7 zeigt die Möglichkeit, anstelle eines Trägerteils 14 etwa gemäß den Figuren 3 oder 4 mit einer Anlagefläche mit den Kontaktpunkten 18, welche im Wesentlichen senkrecht zu einer Längsachse L steht, ein Trägerteil 14 zu verwenden, welches eine Anlagefläche 24 (mit den Kontaktpunkten 18) hat, die bereits um einen bestimmten Winkel α aus dieser Lage senkrecht zur Linie L geneigt ist. Diese Neigung kann gemäß Fig. 7 entweder nach links (Anlagefläche 24') oder nach rechts (Anlagefläche 24) sein. Die Größe des Winkels α hängt hierbei von der geforderten Einbaulage des Spiegelglases oder Spiegelgehäuses ab.

Figur 8 zeigt die Möglichkeit, bei der die Längsachse oder -linie L des Spiegelglases 4 einen Versatz V zum Mittelpunkt des Tragarms 12 aufweist. Entsprechend weist das Trägerteil 14 einen Ausleger 26 auf, der die Kontaktpunkte 18 trägt und der sich radial nach außen von dem Tragarm 12 erstreckt. Darüber hinaus weist - im Fall der Ausbildung eines Glasverstellers gemäß Fig. 8 - der Ausleger 26 und/oder das Trägerteil 14 Befestigungspunkte 28 auf, an welchen das Spiegelgehäuse 6 mit dem Ausleger 26 und/oder dem Trägerteil 14 - gegebenenfalls lösbar - in Verbindung ist.

Das Trägerteil 14 ist in dem Befestigungsbereich mit dem Tragarm 12 dadurch verbunden, dass das Material des Trägerteils 14 geschlossenwandig den Tragarm 12 umgreift. Um die Haltekraft zwischen Trägerteil 14 und Tragarm 12 im Befestigungsbereich zu erhöhen, sind verschiedene Maßnahmen denkbar. Diese Maßnahmen können hierbei entweder alleine eine Verdrehsicherung oder alleine eine Sicherung gegen eine axiale Verschiebung oder eine Kombination hieraus bilden.

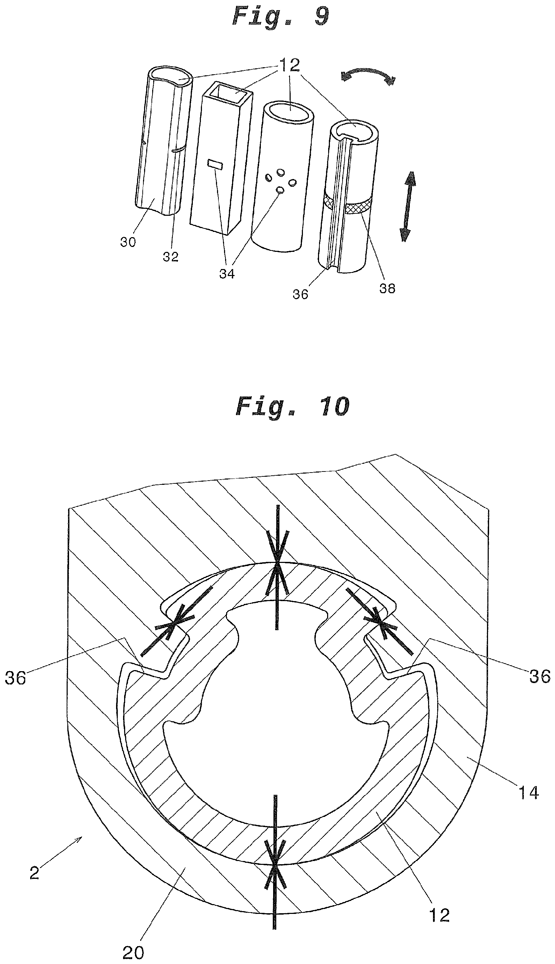

Figur 9 zeigt unterschiedliche Möglichkeiten, wie derartige zusätzliche Fixierungen des Trägerteils 14 gegenüber dem Tragarm 12 möglich sind, wobei Fig. 9 in zusammengefasster Weise insgesamt vier Möglichkeiten darstellt und wobei weiterhin der Gegenstand der Erfindung selbstverständlich nicht auf diese vier dargestellten Möglichkeiten beschränkt ist.

In dem in Fig. 9 links dargestellten Ausführungsbeispiel ist der Tragarm 12 zumindest über seine Längenerstreckung in dem Befestigungsbereich mit einer von der Rohrform mit kreisrundem Querschnitt etwa gemäß Fig. 3 abweichenden Querschnittsform versehen, wobei diese abweichende Querschnittsform durch eine Einziehung 30 annähernd nierenförmig ist. Es ist auch möglich, den Tragarm 12 beidseitig zusammenzudrücken, um ihm einen ovalen Querschnitt zu verleihen. Durch die Einziehung 30 erfolgt bei einer Umfassung des Tragarms 12 durch das Trägerteil 14 eine Erhöhung der Verdrehfestigkeit des Trägerteils 14 um den Tragarm 12. Anstelle hiervon oder zusätzlich zu der Einziehung 30 kann der Tragarm 12 in dem Befestigungsbereich eine oder mehrere Nuten 32 aufweisen, in welche das Material des Trägerteils 14 bei der Ausbildung des Trägerteils 14 und/oder des Abschnitts 20 eintritt.

Im in Fig. 9 zweiten Ausführungsbeispiel von links hat der Tragarm 12 insgesamt oder zumindest in dem Befestigungsbereich einen polygonalen Querschnitt, also beispielsweise die dargestellte Vierkantform. Durch diese polygonale Form oder mehreckige Form besteht eine ausgezeichnete Verdrehsicherung des Trägerteils 14 gegenüber dem Tragarm 12. Weiterhin kann eine Wand des mehrflächig ausgebildeten Tragarms 12 oder können mehrere Wände hiervon Durchbrüche oder Bohrungen 34 aufweisen. Durch diese Durchbrüche 34 erfolgt neben der Sicherung in radialer Richtung auch eine Sicherung in axialer Richtung des Trägerteils 14 gegenüber dem Tragarm 12.

Im in Fig. 9 dritten Ausführungsbeispiel von links hat der Tragarm 12 die bereits angesprochene ovale Querschnittsform zur Verbesserung der Verdrehsicherung des Trägerteils 14 gegenüber dem Tragarm 12 in radialer Richtung. Zusätzlich sind einer oder mehrere Durchbrüche 34 in der Umfangswand des Tragarms 12 vorgesehen.

Im in Fig. 9 ganz rechts dargestellten Ausführungsbeispiel weist der Tragarm 12 zumindest in dem Befestigungsbereich eine durchgehende oder unterbrochene Längsnut 36 und eine oder mehrere sich umfangsseitig erstreckende Rändelungen 38 auf.

Das Trägerteil 14 kann in seiner Gesamtheit aus einem thermoplastisch verarbeitbaren Material gebildet sein oder es kann einen thermoplastisch verarbeitbaren Teilabschnitt aufweisen, der dann in Form des Abschnitts 20 durchgehend oder geschlossenwandig den Umfang des Tragarms 12 umgreift und mit diesem in enge Anlage gelangt, wobei dann noch zusätzlich Maßnahmen etwa gemäß Fig. 9 ergriffen werden können, um die radiale und/oder axiale Halterung des Trägerteils 14 gegenüber dem Tragarm 12 zu verbessern.

Eine Möglichkeit, mit der das Trägerteil 14 den Tragarm 12 umschließend gebildet werden kann, ist, das Trägerteil 14 in dem Befestigungsbereich um den Tragarm 12 herum zu gießen, insbesondere spritzzugießen, wobei dann der Tragarm 12 nach Art eines Einsatz-Spritzgussvorgangs mit in die Form eingelegt wird.

Figur 10 zeigt in übertriebener zeichnerischer Darstellung, dass erfindungsgemäß der Weg gewählt wird, in dem Material des Trägerteils 14 bzw. dem Bereich des Trägerteils 14, der den Tragarm 12 geschlossenwandig umfasst, durch gezielt eingesetzte Schwundbewegungen Formverspannungen zwischen dem Trägerteil 14 und dem Außenumfang des Tragarms 12 hervorzurufen. Hierzu kann der Tragarm 12 umfangsseitig eine oder mehrere Verformungen, beispielsweise Längsnuten 36 etwa gemäß Fig. 9, rechte Darstellung aufweisen, in welche das Material des Trägerteils 14 bei der Umfassung des Tragarms 12 eindringt. Im Zuge der Aushärtung des Trägerteils 14 tritt eine gezielte Verformungs- und Schwundbewegung im Material des Trägerteils 14 auf, welche dann das Trägerteil 14 und/oder den Abschnitt 20 in der in Fig. 10 gezeigten Weise an einer, bevorzugt mehreren Stellen in Linien- oder Flächenpressung mit dem Umfang des Tragarms 12 bzw. den dortigen Längsnuten 36 bringt und damit das Trägerteil 14 gegenüber dem Tragarm 12 verspannt.

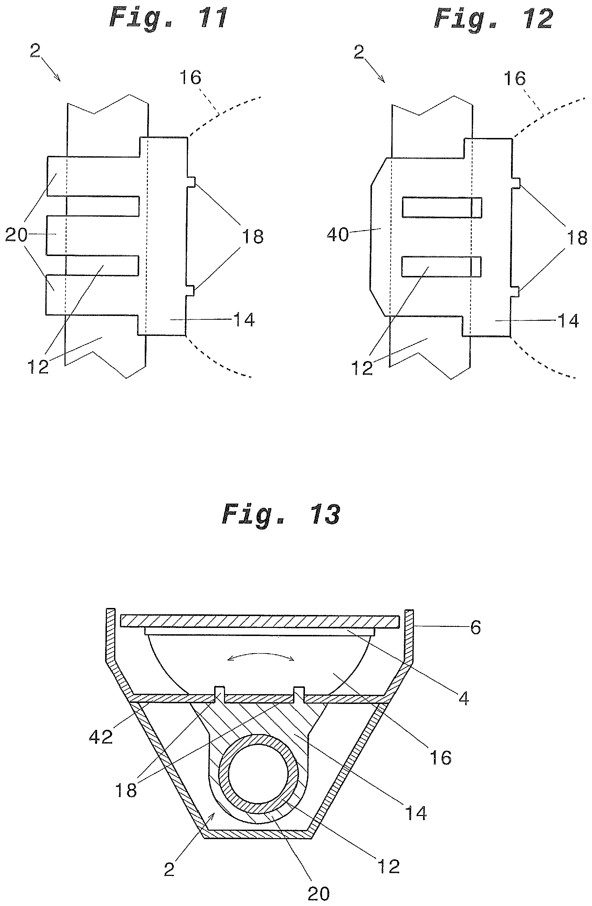

Die Figuren 11 und 12 zeigen, wie an einem Trägerteil 14 mehrere Abschnitte 20 ausgebildet sein können, welche den Umfang des Tragarms 12 geschlossenwandig umfassen. Die einzelnen Abschnitte 20 können hierbei auslegerartig von dem Trägerteil 14 vorspringen und jeder für sich den Tragarm 12 ringförmig umgreifen, wobei zwischen den einzelnen Abschnitten 20 Freiräume oder Abstände vorliegen. In der Abwandlung gemäß Fig. 12 sind die freien Enden der einzelnen Abschnitte 20 mittels eines durchgehenden Stegs 40 untereinander verbunden, so dass anstelle der einzelnen ringförmigen Abschnitte 20 von Fig. 11 in der Ausgestaltungsform gemäß Fig. 12 die Kombination aus Trägerteil 14, Abschnitten 20 und Steg 40 eher eine Hülsenform in dem Befestigungsbereich bildet.

Figur 13 zeigt einen Glasversteller, bei dem das Spiegelgehäuse 6 nicht (wie etwa in Fig. 1 gezeigt) an einem oder zwei der Ausleger 10 festgelegt ist, sondern durch einen Steg oder eine Platte 42 an dem Trägerteil 14 festgelegt ist. Die Kontaktpunkte 18 durchtreten hierbei die Platte 42.

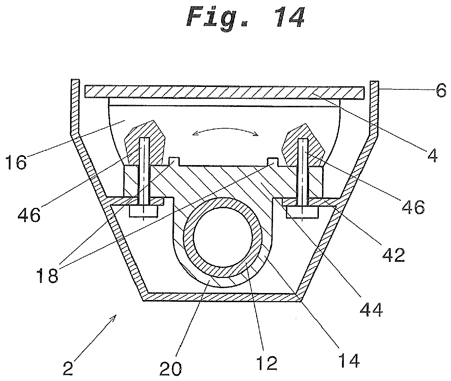

Figur 14 zeigt einen Glasversteller, bei dem die Verstelleinheit 16 über einen Sockel 44 mit dem Trägerteil 14 in Verbindung steht. Zwischen der Verstelleinheit 16 und dem Sockel 44 befinden sich die Kontaktpunkte 18. Der Sockel 44 durchtritt die Platte 42 in einer entsprechend dimensionierten Öffnung und ist an der Platte 42 im Umfangsbereich der dortigen Öffnung mit wenigstens einer Schraube 46 oder einem äquivalenten Befestigungsmittel festgelegt. Die Schraube 46 oder die Schrauben 46 durchtreten hierbei die Platte 42 von der Seite des Tragarms 12 her und können entweder in dem Sockel 44 enden oder sich - wie in Fig. 14 gezeigt - bis in die Verstelleinheit 16 verlaufen, so dass das Spiegelgehäuse 6 (über die Platte 42), der Sockel 44 (und damit das Trägerteil 14) und die Verstelleinheit 16 zu einer Baugruppe zusammengefasst sind.

Der Gegenstand der vorliegenden Erfindung, wie er bisher beschrieben wurde und beansprucht ist, befasst sich mit einem Trägerteil, welches zumindest in dem Befestigungsbereich mit dem Tragarm aus einem thermoplastisch verarbeitbaren Material gebildet ist, also insbesondere aus einem thermoplastischen Kunststoff gebildet ist bzw. in einem zu verformenden Abschnitt einen derartigen thermoplastischen Kunststoff aufweist. Es sei jedoch festzuhalten, dass der Gegenstand der vorliegenden Erfindung nicht ausschließlich hierauf beschränkt ist, sondern dass anstelle eines thermoplastisch verarbeitbaren oder formbaren Materials auch ein anderes Material zum Einsatz gelangen kann, beispielsweise ein duroplastischer Kunststoff, faser- oder gewebeverstärkte Kunstharze oder dergleichen. Die Verwendung eines thermoplastisch verarbeitbaren Materials dürfte zwar - soweit dies zum Anmeldezeitpunkt der vorliegenden Anmeldung absehbar war - besonders vorteilhaft sein, da insbesondere dann, wenn das Trägerteil vollständig aus einem thermoplastisch verarbeitbaren Material gebildet ist, das Trägerteil in einem Arbeitsgang beispielsweise durch einen Spritzgussvorgang mit dem Tragarm verbunden und in seine gewünschte Form gebracht werden kann. Ist das Trägerteil zwei- oder mehrteilig aufgebaut, kann es einen thermoplastisch verarbeitbaren Abschnitt aufweisen, der an einem bereits ausgeformten Trägerteil angebracht wird/ist und der dann durch ein entsprechendes Bearbeitungsverfahren umgeformt wird, um den Tragarm zumindest über einen Teilabschnitt hiervon geschlossenwandig zu umfassen. Beispielsweise kann das Trägerteil aus Aluminium oder einem ähnlichen geeigneten Material oder aus einem thermoplastisch nicht umformbaren Kunststoff sein und weist einen Anbau oder Einsatz auf, der thermoplastisch verarbeitbar ist und dann entsprechend umgeformt wird.

Das Umschließen oder Umspritzen des Tragarms mit einem Teil des Trägerteilmaterials bietet neben den geschilderten Vorteilen auch noch den Vorteil, dass etwaige Unregelmäßigkeiten in der Formgebung und/oder Oberfläche des Tragarms für die erzielbare Verbindungsqualität zwischen Trägerteil und Tragarm keine Rolle spielen, da derartige Unregelmäßigkeiten beim Umschließen (Umspritzen) des Tragarms vom Material des Trägerteils ausgeglichen oder kompensiert werden.

Der Gegenstand der vorliegenden Erfindung liefert somit eine Trägervorrichtung, bei der das Trägerteil an dem Tragarm durch eine einfache, preiswerte, korrosionsbeständige, vibrationsbeständige und zuverlässige Verbindungsmöglichkeit bleibend verbunden werden kann. Hierzu weist die Trägervorrichtung für die Befestigung einer bildgebenden Einrichtung eines indirekten Sichtsystems an einem Fahrzeug auf: einen am Fahrzeug befestigbaren Tragarm und wenigstens ein an dem Tragarm befestigbares Trägerteil, wobei das Trägerteil Anschlussmittel zur Montage der bildgebenden Einrichtung aufweist. Das Trägerteil ist zumindest in einem Befestigungsbereich mit dem Tragarm aus einem thermoplastisch verarbeitbaren Material gebildet und umfasst durch thermoplastische Umformung den Tragarm zumindest über einen Teilabschnitt hiervon geschlossenwandig.

### Bezugszeichenliste:

- 2: Trägervorrichtung/Spiegelträger
- 4: Spiegelglas
- 6: Spiegelgehäuse
- 8: Spiegelfuß
- 10: Ausleger
- 12: Tragarm
- 14: Trägerteil
- 16: Verstelleinheit
- 18: Kontaktpunkt(e)
- 20: Abschnitt
- 22: Adapter
- 24: Anlagefläche
- 26: Ausleger
- 28: Befestigungspunkt(e)
- 30: Einziehung (Verdrehsicherung)
- 32: Nut (Axialsicherung)
- 34: Durchbruch (Axialsicherung)
- 36: Längsnut (Verdrehsicherung)
- 38: Rändelung (Axial- und/oder Verdrehsicherung)
- 40: Steg
- 42: Platte
- 44: Sockel
- 46: Schraube(n)

## Patentansprüche

1. Trägervorrichtung (2) für die Befestigung einer bildgebenden Einrichtung eines indirekten Sichtsystems an einem Fahrzeug, mit
einem am Fahrzeug befestigbaren Tragarm (12) und wenigstens einem an dem Tragarm (12) befestigbaren Trägerteil (14), wobei
das Trägerteil (14) Anschlussmittel (16, 18, 18', 22) zur Montage der bildgebenden Einrichtung aufweist;
das Trägerteil (14) zumindest in einem Befestigungsbereich mit dem Tragarm (12) aus einem thermoplastisch verarbeitbaren Material gebildet ist und durch thermoplastische Umformung den Tragarm (12) zumindest über einen Teilabschnitt hiervon geschlossenwandig umfasst;
das Trägerteil (14) in dem Befestigungsbereich mit dem Tragarm (12) um den Tragarm (12) herum gegossen, insbesondere einsatz-spritzgegossen ist;
der Tragarm (12) als ein Rohrprofil ausgebildet ist;
das Trägerteil (14) den Tragarm (12) drehfest umfasst,
**dadurch gekennzeichnet, dass**
der Tragarm (12) in dem Befestigungsbereich eine von der restlichen Rohrprofilform abweichende Formgebung und eine Oberflächenkonturierung aufweist;
das Trägerteil (14) in dem Befestigungsbereich nach dem Vergussvorgang einen insbesondere radial gerichteten Schwund erfährt, der zu einer Verspannung zwischen Tragarm (12) und Trägerteil (14) führt; und
dass Abschnitte des durch Schwund verspannten Trägerteils (14) gegen die Oberflächenkonturierung des Tragarms (12) drücken.

2. Trägervorrichtung (2) nach Anspruch 1, **dadurch gekennzeichnet, dass** der Tragarm (12) zumindest in dem Befestigungsbereich, bevorzugt in seiner Gesamtheit im Wesentlichen langgestreckt/geradlinig ausgebildet ist.

3. Trägervorrichtung (2) nach Anspruch 1 oder 2, **dadurch gekennzeichnet, dass** das Rohrprofil einen Rundquerschnitt hat.

4. Trägervorrichtung (2) nach einem der Ansprüche 1 bis 3, **dadurch gekennzeichnet, dass** die abweichende Formgebung durch eine bleibende Verformung der Rohrprofilwand gebildet ist.

5. Trägervorrichtung (2) nach einem der Ansprüche 1 bis 3, **dadurch gekennzeichnet, dass** die abweichende Formgebung durch wenigstens ein separates Bauteil gebildet ist, welches starr mit der Rohrprofilwand verbunden ist und von dieser vorsteht.

6. Trägervorrichtung (2) nach einem der vorhergehenden Ansprüche, **dadurch gekennzeichnet, dass** die bildgebende Einrichtung ein Rückspiegel (4, 6) ist und das Trägerteil (14) Element eines Glasverstellers ist.

7. Trägervorrichtung (2) nach einem der Ansprüche 1 bis 5, **dadurch gekennzeichnet, dass** die bildgebende Einrichtung ein Rückspiegel (4, 6) ist und das Trägerteil (14) Element eines Kopfverstellers ist.

8. Trägervorrichtung (2) nach einem der vorhergehenden Ansprüche, **dadurch gekennzeichnet, dass** der Tragarm (12) aus Metall oder einer Metalllegierung ist.

9. Trägervorrichtung (2) nach einem der vorhergehenden Ansprüche, **dadurch gekennzeichnet, dass** an dem Tragarm (12) neben dem wenigstens einen Trägerteil (14) wenigstens eine weiteres Bauteil oder eine weitere Komponente anordenbar ist, welches oder welche zur mittel- oder unmittelbaren Fahrerunterstützung dient.

10. Indirektes Sichtsystem für ein Fahrzeug, mit einer Trägervorrichtung (2) für die bildgebende Einrichtung hierfür nach wenigstens einem der Ansprüche 1 bis 9.

## Claims

1. A mounting device (2) for mounting an imaging device of an indirect vision system on a vehicle, with
a support arm (12) to be fixed to the vehicle (12) and at least one carrier member (14) to be fixed to the support arm (12), wherein
the carrier member (14) comprises connecting means (16, 18, 18', 22) for mounting the imaging device,
the carrier member (14) is formed, at least in a fixing area with the support arm (12), as a thermoplastic melt-processable material and surrounds the support arm (12) by thermoplastic moulding, at least over a partial section thereof closed walled,
the carrier member (14) encapsulates the support arm (12) in the fixing area, in particular by means of injection moulding;
the support arm (12) is formed as a tubular profile;
the carrier member (14) encompasses the support arm (12) in a torque-proof manner;
**characterised in that**
the support arm (12) has a shape and surface contouring deviating from the rest of the tubular profile shape in the fixing area;
the carrier member (14) in the fixing area experiences a particularly radially directed shrinkage after the casting process, which leads to a bracing between the support arm (12) and carrier member (14); and
that sections from the shrunk, tensioned carrier member (14) press against the surface contouring of the supporting arm (12).

2. A mounting device (2) according to claim 1, **characterised in that** the support arm (12) is, at least in the fixing area, preferably formed in its entirety as essentially elongated/rectilinear.

3. A mounting device (2) according to claim 1 or 2, **characterised in that** the tubular profile has a rounded cross-section.

4. A mounting device (2) according to one of the claims 1 to 3, **characterised in that** the deviating shape characteristic is formed by a permanent deformation of the tubular profile wall.

5. A mounting device (2) according to one of the claims 1 to 3, **characterised in that** the deviating shape characteristic is formed by at least one separate component which is rigidly connected to the tubular section wall and projects from this.

6. A mounting device (2) according to one of the preceding claims, **characterised in that** the imaging device is a rear-view mirror (4, 6) and the carrier member (14) is part of a glass adjuster.

7. A mounting device (2) according to one of claims 1 to 5, **characterised in that** the imaging device is a rear-view mirror (4, 6) and the carrier member (14) is part of a head adjuster.

8. A mounting device (2) according to one of the preceding claims, **characterised in that** the support arm (12) is made of metal or a metal alloy.

9. A mounting device (2) according to one of the preceding claims, **characterised in that**, on the supporting arm (12), a further constructional element or a further component can be arranged adjacent to the at least one carrier member (14) which is, or which serves for the direct or indirect driver support.

10. Indirect vision system for a vehicle, comprising a mounting device (2) for the imaging device in accordance with at least one of claims 1 to 9.

## Revendications

1. Dispositif de support (2) pour la fixation d'un mécanisme donneur d'image d'un système de vision indirecte sur un véhicule, avec
un bras porteur (12) qui peut être fixé sur le véhicule et au moins une partie de support (14) qui peut être fixée sur le bras porteur (12), où
la partie de support (14) présente des moyens de raccordement (16, 18, 18', 22) pour le montage du mécanisme donneur d'image ;
la partie de support (14) est formée en un matériau usinable de manière thermoplastique au moins dans un domaine de fixation avec le bras porteur (12) et entoure à paroi fermée le bras porteur (12) par formage thermoplastique au moins sur un segment partiel de celui-ci ;
la partie de support (14) est moulée, en particulier moulée par injection avec insert, autour du bras porteur (12) dans le domaine de fixation avec le bras porteur (12) ;
le bras porteur (12) est agencé comme un profilé tubulaire ;
la partie de support (14) entoure le bras porteur (12) d'une manière résistant à la rotation,
**caractérisé en ce que**
le bras porteur (12) présente dans le domaine de fixation une conformation qui s'écarte de la forme de profilé tubulaire restante et un contour de surface ;
la partie de support (14) subit dans le domaine de fixation après le processus de coulée une contraction dirigée en particulier radialement, qui conduit à une contrainte entre le bras porteur (12) et la partie de support (14) ; et
**en ce que** des segments de la partie de support (14) contrainte par la contraction appuient contre le contour de surface du bras porteur (12).

2. Dispositif de support (2) selon la revendication 1, **caractérisé en ce que** le bras porteur (12) est agencé de manière sensiblement allongée/rectiligne au moins dans le domaine de fixation, de préférence dans sa totalité.

3. Dispositif de support (2) selon la revendication 1 ou 2, **caractérisé en ce que** le profilé tubulaire a une section droite ronde.

4. Dispositif de support (2) selon l'une des revendications 1 à 3, **caractérisé en ce que** la conformation qui s'écarte est formée par une déformation permanente de la paroi du profilé tubulaire.

5. Dispositif de support (2) selon l'une des revendications 1 à 3, **caractérisé en ce que** la conformation qui s'écarte est formée par au moins un élément constitutif séparé, qui est relié de manière rigide à la paroi du profilé tubulaire et qui fait saillie de celle-ci.

6. Dispositif de support (2) selon l'une des revendications précédentes, **caractérisé en ce que** le mécanisme donneur d'image est un rétroviseur (4, 6) et la partie de support (14) est un élément d'un organe de réglage de verre.

7. Dispositif de support (2) selon l'une des revendications 1 à 5, **caractérisé en ce que** le mécanisme donneur d'image est un rétroviseur (4, 6) et la partie de support (14) est un élément d'un organe de réglage de tête.

8. Dispositif de support (2) selon l'une des revendications précédentes, **caractérisé en ce que** le bras porteur (12) est en métal ou en un alliage métallique.

9. Dispositif de support (2) selon l'une des revendications précédentes, **caractérisé en ce qu'**au moins un autre élément constitutif ou un autre composant, qui sert au soutien indirect ou direct du conducteur, peut être disposé sur le bras porteur (12) en plus de la au moins une partie de support (14).

10. Système de vision indirecte pour un véhicule, avec un dispositif de support (2) pour le mécanisme donneur d'image à cet effet selon au moins l'une des revendications 1 à 9.
